# EUROPEAN PATENT APPLICATION

(11) **EP 4 712 575 A1**
(43) Date of publication of application: **18.03.2026**
(21) Application number: 24807074.0
(22) Date of filing: 02.05.2024
(51) Int. Cl.: H04W 48/08, H04W 36/08, H04W 36/36, H04W 72/0457, H04W 92/20

(54) **BASE STATION DEVICE, TERMINAL DEVICE, CONTROL METHOD, AND PROGRAM FOR EFFICIENT MANAGEMENT OF CONNECTION CONFIGURATION INFORMATION**

(30) Priority: 12.05.2023 JP 2023079348
(71) Applicant: KDDI Corporation, Tokyo 163-8003 (JP)
(72) Inventor: LI, Yanwei, Tokyo 163-8003 (JP); TAKEDA, Hiroki, Tokyo 163-8003 (JP); TAKAKU, Yoshitaka, Tokyo 163-8003 (JP); HONG, Jungyeon, Fujimino-shi, Saitama 356-8502 (JP)
(74) Representative: Mathys & Squire
(86) International application number: PCT/JP2024/016874
(87) International publication number: WO 2024/237121

(57) **Abstract**

A base station apparatus obtains information for generating setting information related to a plurality of cells for a conditional handover (CHO) or a conditional secondary cell addition or change (CPAC) in a terminal apparatus that is currently connected to the base station apparatus, the information including a reference configuration, which is common to two or more cells among the plurality of cells and to which identification information uniquely specifying the reference configuration is allocated, delta configurations that are respectively specific to the two or more cells, and the identification information of the reference configuration to be combined with the delta configurations, provides the terminal apparatus with the information and a condition under which the CHO or the CPAC is to be executed, and in a case where at least one configuration among the reference configuration and the delta configurations is to be deleted or changed, designates the at least one configuration and issues an instruction for the deletion or the change to the terminal apparatus.

## Description

### TECHNICAL FIELD

The present invention relates to a technique for efficient management of wireless connection settings.

### BACKGROUND ART

In order to ensure the continuity of communication, a cellular communication system uses a handover technique to switch a connection destination of a terminal apparatus in accordance with, for example, movement of the terminal apparatus. In a standard method of handover, after degradation of the communication quality of a wireless link to which a terminal apparatus is currently connected, setting processing for a handover is started on the core network side, and a base station apparatus transmits an instruction message to the terminal apparatus. However, with this method, the processing performed from when the actual degradation of the communication quality occurs until the transmission of a handover instruction is time-consuming, and this can possibly prolong the time period for which communication cannot be performed or for which the communication quality is insufficient. In this regard, the 3rd Generation Partnership Project (3GPP^{®}) has discussed a method in which this setting processing is executed in advance, and in a case where a predetermined condition is satisfied in the terminal apparatus, the connection destination cell is switched without needing to receive an instruction message from the base station apparatus (see NPL 1). The predetermined condition includes, for example, a case where the wireless quality of a neighboring cell has become more favorable than the wireless quality of the cell to which the terminal apparatus is currently connected by a predetermined level or more, and a case where the wireless quality of the cell to which the terminal apparatus is currently connected has become a predetermined value or lower. According to this method, setting processing for a handover is completed on the core network side before the occurrence of, for example, a decrease in the communication quality that requires a handover, and therefore it is possible to significantly reduce the time period for which communication cannot be performed or for which the communication quality is insufficient. Such a handover is referred to as a conditional handover, or a CHO.

Similarly, for example, in multi-connectivity (MC) where a terminal apparatus connects to a plurality of cells, setting processing can be executed in advance, and in a case where a predetermined condition is satisfied in the terminal apparatus, the terminal apparatus can add or change a secondary cell without receiving an instruction message from a base station apparatus. Note that hereinafter, this conditional addition or change of a secondary cell may be referred to as CPAC.

### CITATION LIST

### NON-PATENT LITERATURE

NPL 1: 3GPP TR38.874, V16.0.0, December 2018

### SUMMARY OF INVENTION

### TECHNICAL PROBLEM

In a discussion on the release 18 standard of the 3GPP, it was agreed that in the aforementioned setting processing, setting processing is to be executed using a common reference configuration for a plurality of candidate cells, and delta configurations that designate setting values different from that of the reference configuration for the respective candidate cells. However, an execution procedure of such setting processing has been unclear, and there is demand for establishment of an efficient procedure.

### SOLUTION TO PROBLEM

The present invention provides a method of efficiently executing setting processing that uses a reference configuration and a delta configuration related to a conditional handover or a conditional secondary cell addition or change, in a terminal apparatus.

A base station apparatus according to one aspect of the present invention comprises obtaining means for obtaining information for generating setting information related to a plurality of cells for a conditional handover (CHO) or a conditional secondary cell addition or change (CPAC) in a terminal apparatus that is currently connected to the base station apparatus, the information including a reference configuration, which is common to two or more cells among the plurality of cells and to which identification information uniquely specifying the reference configuration is allocated, delta configurations that are respectively specific to the two or more cells, and the identification information of the reference configuration to be combined with the delta configurations; providing means for providing the terminal apparatus with the information and a condition under which the CHO or the CPAC is to be executed; and instructing means for, in a case where at least one configuration among the reference configuration and the delta configurations is to be deleted or changed, designating the at least one configuration and issuing an instruction for the deletion or the change to the terminal apparatus.

A terminal apparatus according to one aspect of the present invention comprises obtaining means for obtaining, from a base station apparatus to which the terminal apparatus is currently connected, information for generating setting information related to a plurality of cells for a conditional handover (CHO) or a conditional secondary cell addition or change (CPAC), and a condition under which the CHO or the CPAC is to be executed, the information including a reference configuration common to two or more cells among the plurality of cells, and delta configurations that are respectively specific to the two or more cells; generating means for, with respect to at least one cell among the two or more cells, generating setting information for communication in the at least one cell with use of the corresponding delta configuration and the reference configuration; executing means for, upon receiving an instruction for deletion or change with a designation of at least one configuration among the reference configuration and the delta configurations, executing the deletion or change of the designated configuration among the reference configuration and the delta configurations; and executing means for executing the CHO or the CPAC with use of the generated setting information in response to the condition being satisfied.

### ADVANTAGEOUS EFFECTS OF INVENTION

The present invention makes it possible to efficiently execute setting processing that uses a reference configuration and a delta configuration related to a conditional handover or a conditional secondary cell addition or change, in a terminal apparatus.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an exemplary configuration of a wireless communication system.
FIG. 2 is a diagram showing an example of a flow of processing executed in the wireless communication system.
FIG. 3 is a diagram showing an example of a flow of processing executed in the wireless communication system.
FIG. 4 is a diagram showing an example of a flow of processing executed in the wireless communication system.
FIG. 5 is a diagram showing an example of a flow of processing for updating setting information.
FIG. 6 is a diagram showing an example of a flow of processing for determining the appropriateness of setting information.
FIG. 7 is a diagram showing an example of a flow of processing for determining the appropriateness of setting information.
FIG. 8 is a diagram showing an exemplary hardware configuration of an MN, SNs, and a terminal apparatus.
FIG. 9 is a diagram showing an exemplary functional configuration of the terminal apparatus.
FIG. 10 is a diagram showing an exemplary functional configuration of the MN.
FIG. 11 is a diagram showing an exemplary functional configuration of the SNs.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

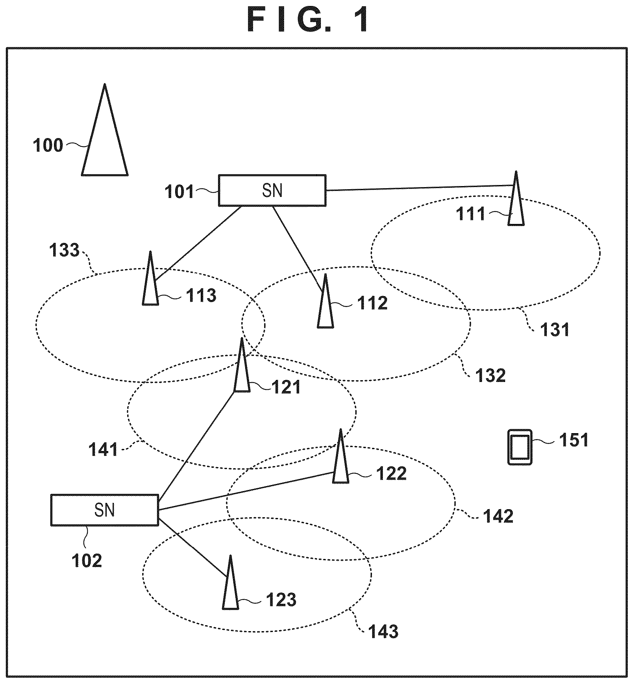

FIG. 1 shows an exemplary configuration of a wireless communication system according to the present embodiment. The present wireless communication system is a cellular communication system that conforms to, for example, a cellular communication standard, such as the fifth generation (5G) standard defined by the 3rd Generation Partnership Project (3GPP^{®}). Note that this is an example, and the following discussion is applicable to any system in which a terminal apparatus can continue communication while switching a connection destination cell.

In the wireless communication system of FIG. 1, a base station apparatus provides a wireless communication service to a terminal apparatus 151. The terminal apparatus 151 can connect to two or more cells in parallel. Among these two or more cells, a cell that controls communication of the terminal apparatus 151 is referred to as a primary cell, and a cell that connects to the terminal apparatus 151 under control of a base station apparatus of the primary cell (a master node: MN 100) is referred to as a secondary cell. Note that in the present embodiment, to simplify the description, it is assumed that the terminal apparatus 151 has been connected to the MN 100, and is additionally connected to a secondary cell. An example of FIG. 1 represents an example in which two base station apparatuses (secondary nodes: SN 101 and SN 102) provide cells that are candidates for a connection destination as a secondary cell for the terminal apparatus 151.

A base station apparatus can be composed of a central unit (CU) and distributed units (DU). A DU includes, for example, an antenna, a function of processing signals in a wireless frequency, and the like, and is in charge of a function as an interface that transmits/receives wireless signals to/from the terminal apparatus. Each DU forms at least one cell. On the other hand, the CU is configured to encompass one or more DUs, and perform, for example, control on communication performed by these DUs. For example, the CU generates setting information when the terminal apparatus connects to each DU, and notifies the terminal apparatus of the same. Note that in the example of FIG. 1, the SN 101 can include functions as a CU, and DUs 111 to 113 can provide cells 131 to 133, respectively. Furthermore, the SN 102 similarly includes functions as a CU, and DUs 121 to 123 provide cells 141 to 143, respectively. The terminal apparatus 151 is configured to receive the provided wireless communication service by connecting to at least one of these cells and transmitting/receiving wireless signals in this connection destination cell. Note that while the terminal apparatus 151 connects to a base station apparatus that configures a cell including a position at which the terminal apparatus 151 itself is staying, this will hereinafter be described as "connect to the cell (provided by this base station apparatus)".

In the present embodiment, an advance setting for adding or changing a secondary cell is configured in response to establishment of connection to, for example, a primary cell by the terminal apparatus 151, or in response to a certain degree of degradation of the wireless quality in a currently-connected secondary cell. A state where this advance setting has been configured is a state where setting of parameters and the like for a case where the terminal apparatus 151 is to connect to a connection destination candidate cell has been completed, but the terminal apparatus 151 has not actually established a connection to this cell. The advance setting includes a condition for connecting to a cell for, for example, changing or adding a connection destination cell; the terminal apparatus 151 establishes synchronization in a new connection destination cell and attempts to connect in a case where it has been determined that this condition has been satisfied. Note that in a case where a connection destination secondary cell is to be changed, the terminal apparatus 151 executes processing for disconnecting from a connection source secondary cell. Processing for autonomously switching or adding a secondary cell using such an advance setting when the terminal apparatus 151 has determined that the condition is satisfied is referred to as a Conditional Secondary Cell Addition or Change (CPAC). Note that processing for autonomously switching a connection destination primary cell when the terminal apparatus 151 has determined that the condition is satisfied is referred to as a conditional handover (CHO). Note that although the following embodiment will be described with a focus on the CPAC, it is also applicable to the CHO. That is to say, the following discussion can be applicable to the CHO by replacing a CPAC condition with a CHO condition, and an advance setting for the CPAC with an advance setting for the CHO. Note that although message types can differ between the CHO and the CPAC, a person skilled in the art would be able to replace with appropriate messages as needed.

In a case where the CPAC is performed, the currently-connected MN 100 transmits a message for requesting an addition of a secondary cell (SgNB Addition Request) to other base station apparatuses that provide cells that are candidates for an additional or post-change secondary cell. Note that this request for an addition of a secondary cell may be started when, for example, a base station apparatus that provides a secondary cell to which the terminal apparatus 151 is currently connected has notified the currently-connected MN 100 of a predetermined message (e.g., SgNB Change Required). In this case, the MN 100 can transmit the above-described request for an addition of a secondary cell in response to reception of this predetermined message. Then, other base station apparatuses that provide cells that are candidates for an additional or post-change secondary cell (hereinafter, these base station apparatuses may be referred to as "candidate base stations") transmit a response message to this message (SgNB Addition Request Acknowledge) to the MN 100, including information of, for example, communication parameters that should be used in a case where the terminal apparatus 151 has added or changed a secondary cell. Here, the candidate base stations hold information of, for example, the transmitted communication parameters as advance setting information. Also, the MN 100 or candidate base stations decide a condition that should be satisfied when that secondary cell is added or changed. Then, the MN 100 notifies the terminal apparatus 151 of information of communication parameters that should be used in a case where a secondary cell has been added or changed while cells provided by the candidate base stations are considered as secondary cells, as well as the advance setting information that includes a condition for making such connection. This notification can be provided using, for example, a Radio Resource Control (RRC) message. In an example, the terminal apparatus 151 is notified of the advance setting information via an RRC Reconfiguration message.

Here, pieces of information in the advance setting information can be configured to include reference setting information (a reference configuration) that acts as a standard, and setting information (a delta configuration) that is a difference between each piece of setting information of a secondary cell candidate and this reference configuration. The reference configuration is setting information common to a plurality of cells, and the delta configuration is information related to a part of setting information of each cell that is different from the reference configuration. That is to say, the delta configuration is setting information specific to each cell. When the terminal apparatus 151 has received the reference configuration and the delta configuration, regarding setting items that are included in the delta configuration, the terminal apparatus 151 uses setting values thereof. On the other hand, regarding setting items that are not included in the delta configuration, the terminal apparatus 151 uses setting values designated in the reference configuration. Note that the terminal apparatus 151 can be configured as follows: among setting items that are not included in the delta configuration, regarding setting items that are defined so that they need to be maintained in the reference configuration (designated as "Need M"), setting values in the reference configuration are to be used, whereas regarding other setting items, setting values in the reference configuration are not to be used. Also, regarding setting items that are defined in the reference configuration so that an operation related to the setting items needs to be performed only once among setting items that are not included in the delta configuration (designated as "Need N"), the MN 100 can notify the terminal apparatus 151 of information for judging whether to execute the operation related to the setting items only once in accordance with setting values in the reference configuration, or to understand that setting values in the reference configuration are intended to be deleted and judge that the operation related to the setting items is not to be executed. Furthermore, in this case, the MN 100 and the terminal apparatus 151 may be set in advance so that one of operations is executed fixedly without requiring notification of this information. By using a combination of these reference configuration and delta configuration, a data amount of setting information that the terminal apparatus 151 is notified can be reduced. That is to say, the terminal apparatus 151 is notified of setting information common to N cells as a reference configuration only once with regard to a plurality of cells, and setting information specific to each cell on a cell-by-cell basis via a delta configuration; in this way, among pieces of setting information related to (N - 1) cells, the pieces of setting information that correspond to the reference configuration can be omitted in the notification, and thus the data amount of the notified pieces of setting information can be reduced. Also, the MN 100 can use setting information of one cell among a plurality of cells that are present as candidate cells as a reference configuration, use setting information of a serving cell that is currently used in communication (one of a plurality of cells in a case where the plurality of cells are used as serving cells) as a reference configuration, or use setting information of a cell other than candidate cells and a serving cell(s) as a reference configuration. In this case, the MN 100 can notify the terminal apparatus 151 of information for specifying which one of pieces of setting information of cells is to be used as a reference configuration. As one example, in a case where setting information of one cell among a plurality of serving cells (or candidate cells) that are present is used as a reference configuration, the MN 100 can efficiently designate the setting information that is used as the reference configuration using existing identification information that is specifically appended to the setting information, such as CellGroupId, SCellIndex, and condReconfigId.

As described above, a delta configuration is composed of setting items that include setting values different from a reference configuration out of setting information of each cell. Therefore, the smaller the difference between setting information of each cell and a reference configuration, the number of setting items included in a delta configuration decreases, and a data amount of the entire delta configuration can be reduced. On the other hand, if there is a large gap between setting information of each cell and a reference configuration, more setting items are included in a delta configuration, and a data amount thereof also increases. In some cases, almost all of the setting items in the reference configuration are replaced with the setting items in the delta configuration, which could possibly increase a data amount of entire setting information as well.

In the present embodiment, in view of the foregoing issue, a plurality of reference configurations can be set, and the terminal apparatus 151 is notified of not only these plurality of reference configurations, but also information indicating which one of these plurality of reference configurations serves as a standard for a delta configuration related to each candidate cell. For example, the MN 100 notifies the terminal apparatus 151 of pieces of information in the following format.
· First reference configuration (reference configuration ID = 1)
· Second reference configuration (reference configuration ID = 2)
· Information of the cell 131 (first delta configuration, reference configuration ID = 1)
· Information of the cell 132 (second delta configuration, reference configuration ID = 1)
   ...
· Information of the cell 142 (fifth delta configuration, reference configuration ID = 2)
· Information of the cell 143 (sixth delta configuration, reference configuration ID = 2)

Here, a reference configuration ID is identification information that can uniquely specify one reference configuration. The terminal apparatus 151 is notified of pieces of information of the first reference configuration and the second reference configuration as an information element, such as ReferenceConfigAddModlist, among the foregoing pieces of information. Also, the terminal apparatus 151 is notified of information of a delta configuration specific to each cell as a CondReconfigToAddMod information element. The CondReconfigToAddMod information element is, for example, prepared for each candidate cell. The CondReconfigToAddMod information element includes information indicating identification information (condReconfigId) specific to this information element, a cell identifier related to each cell, a reference configuration ID, a condition under which the CPAC should be performed, and a delta configuration of that cell. Note that while the CPAC denotes a Conditional Secondary Cell Addition and Change, different conditions can be prepared for an addition of a secondary cell and a change of a secondary cell. For example, with regard to the cell 131, the terminal apparatus 151 can extract the first reference configuration using the information of reference configuration ID = 1 from the received pieces of information, and generate setting information of the cell 131 based on this first reference configuration and the first delta configuration. Similarly, the terminal apparatus 151 can generate setting information of the cell 143 using the second reference configuration and the sixth delta configuration. According to this configuration, for example, even in a case where the pieces of setting information for connection of the cell 131, the cell 132, and the cell 143 are significantly different from one another, disadvantages in using a common reference configuration can be eliminated. Note that in one of the cells, a reference configuration itself may be used as setting information of that cell. In other words, setting information of one of the cells can be used as a reference configuration. For example, setting information of the cell 131 may be used as a first reference configuration, and/or setting information of the cell 143 may be used as a second reference configuration. In this case, for example, the MN 100 notifies the terminal apparatus 151 of pieces of information in the following format.
· First reference configuration (cell 131, reference configuration ID = 1)
· Second reference configuration (cell 143, reference configuration ID = 2)
· Information of the cell 132 (second delta configuration, reference configuration ID = 1)
   ...
· Information of the cell 142 (fifth delta configuration, reference configuration ID = 2)

Note these are examples, and the terminal apparatus 151 may be notified of pieces of information in other formats to the extent that the terminal apparatus 151 can configure setting information of each cell. Note that setting information of each cell includes not only communication parameters, but also a CPAC condition (condExecutionCond, a condition for adding/changing a cell, and an identifier for designating an execution condition that is separately defined).

In an example, different reference configurations may be used for the respective SNs, or a common reference configuration may be used for a plurality of SNs while another reference configuration is used for one or more other SNs. Also, a plurality of reference configurations may be used within one SN. A group of cells that use such a common reference configuration may be, for example, decided by the MN 100 to which the terminal apparatus 151 is currently connected, or decided by an SN; also, such a group of cells may be decided among the MN 100, the SN 101, and the SN 102. Furthermore, a group that uses a common reference configuration may be determined in advance.

Next, some examples of a flow of processing for deciding a reference configuration and a delta configuration will be described.

First, a case where the MN 100 decides a reference configuration will be described as a first example. Once the MN 100 has decided a reference configuration, it notifies an SN that provides cells that use this reference configuration of this reference configuration. The SN decides a difference between setting information in each of the cells provided by the self-apparatus and the notified reference configuration as a delta configuration of that cell, and notifies the MN 100 of the delta configuration. Note that the SN may refuse to use the notified reference configuration. In this case, the SN can notify the MN 100 of another reference configuration to be used in place of the notified reference configuration, and a delta configuration generated based on the other reference configuration. Note that the MN 100 may notify the SN of identification information of the reference configuration of which the SN is notified (reference configuration ID), and one or more pieces of identification information that can be allocated to other reference configurations in a case where the use of this reference configuration is refused. In this case, when notifying the MN 100 of the above-described other reference configurations, the SN can notify the MN 100 of identification information allocated to the above-described other reference configurations.

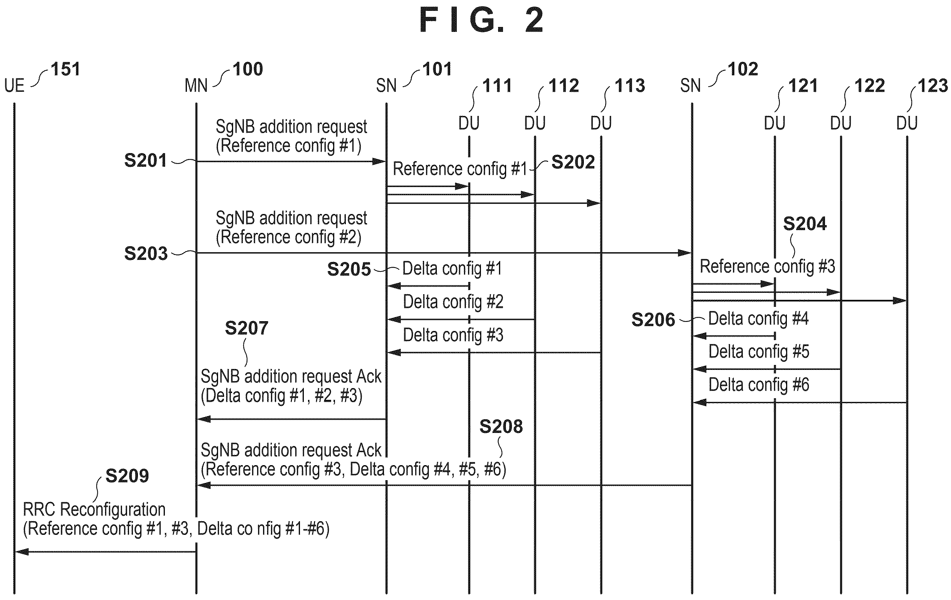

For example, as shown in FIG. 2, the MN 100 transmits SgNB addition request to the SN 101, including a first reference configuration (Reference config #1) (S201). The SN 101 can agree to use this first reference configuration, and cause each of subordinate DUs (DUs 111 to 113) to generate a delta configuration by notifying the same of this first reference configuration (S202). Each DU prepares setting information that is intended for the UE 151 to connect to the self-apparatus, and notifies the SN 101 of a delta configuration that is information of a difference between this setting information and the first reference configuration (S205). Note that the SN 101 may request each DU to provide a notification of the setting information intended for connection of the UE 151, and each DU may notify the SN 101 of the setting information. In this case, the SN 101 can generate a delta configuration related to each DU from the first reference configuration and the notified setting information. Upon obtaining the delta configuration related to each DU, the SN 101 can notify the MN 100 of information of this delta configuration (S207). Note that the SN 101 may provide the MN 100 with a notification indicating that the first reference configuration notified by the MN 100 is currently used. Note that a notification from the SN to the MN 100 can be provided using, for example, an information element of SgNB addition request ACK. For example, a notification of information can be provided using CG-CandidateList. Also, a newly defined information element other than CG-CandidateList may be used. Information exchange between the MN 100 and the SN via an Xn interface may be performed using any message that can be used in this information exchange.

Meanwhile, the MN 100 transmits SgNB addition request to the SN 102, including of a second reference configuration (Reference config #2) (S203). The SN 102 can refuse to use this second reference configuration, and cause each of subordinate DUs (DUs 121 to 123) to generate a delta configuration by notifying the same of a third reference configuration (S204). Each DU prepares setting information that is intended for the UE 151 to connect to the self-apparatus, and notifies the SN 102 of a delta configuration that is information of a difference between this setting information and the third reference configuration (S206). In this case also, each DU may notify the SN 102 of the setting information itself, and the SN 102 may generate delta configurations using the third reference configuration, similarly to the above-described case. Upon obtaining the delta configuration related to each DU, the SN 102 can notify the MN 100 of information of this delta configuration (S208). Note that in this case, the SN 102 notifies the MN 100 of the third reference configuration that is used in place of the second reference configuration.

Note that transmission/reception of information between a CU and DUs in an SN can be performed using a CPAC-related information element (IE) included in UE context setup request, UE context setup request response, UE context release request, UE context release command, UE context release complete, UE context modification request, or UE context modification response. Also, an IE for communication settings that use the reference configuration may be newly prepared in an existing message of an F1 interface, or a new message of the F1 interface may be prepared. Note that the same goes for the following description. Note that a CU may notify DUs of information using a CU to DU RRCinformation information element, and DUs may notify a CU of information using a DU to CU RRCinformation information element. Note that in a case where one DU forms a plurality of cells, information that designates to which cell information transmitted/received between the DU and a CU is related can also be transmitted/received together.

Once the MN 100 has thus obtained the delta configurations related to the respective cells that are candidate cells of a secondary cell, it notifies the UE 151 of information of these delta configurations and the reference configurations (S209). In the example of FIG. 2, the UE 151 is notified of the first reference configuration related to setting information of subordinate cells of the SN 101, the third reference configuration related to setting information of subordinate cells of the SN 102, and the delta configurations of the respective cells. Here, as stated earlier, the UE 151 is notified of each delta configuration together with information indicating to which reference configuration each delta configuration is related (reference configuration ID). In the example of FIG. 2, the UE 151 is provided with a notification indicating that the delta configurations of the DUs 111 to 113 are associated with the first reference configuration, and the delta configurations of the DUs 121 to 123 are associated with the third reference configuration.

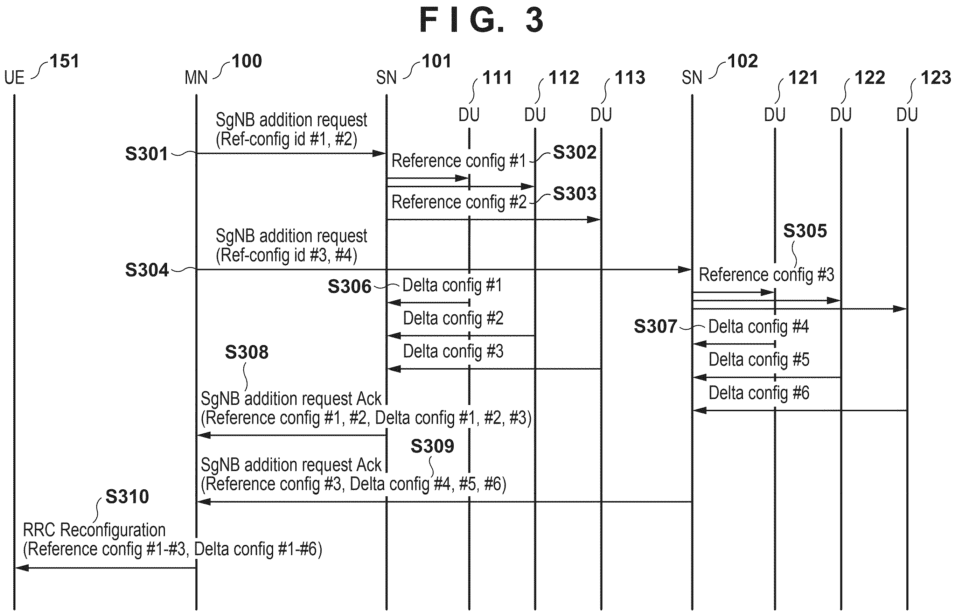

Next, an example in which SNs decide reference configurations will be described as a second example. As shown in FIG. 3, the MN 100 transmits SgNB addition request to the SN 101 and the SN 102. Via this SgNB addition request, the MN 100 can provide the SNs with a notification indicating that reference configurations and delta configurations should be generated. Also, at this time, the MN 100 can notify each SN of usable reference configuration IDs. In this way, the maximum number of reference configurations that can be set by the SNs can be defined. In the example of FIG. 3, the SN 101 is notified of reference configuration IDs = 1 and 2 (S301), and the SN 102 is notified of reference configuration IDs = 3 and 4 (S304). Note that in the example of FIG. 3, the MN 100 provides a notification of reference configuration IDs so that a recognition concerning reference configuration IDs is shared between the MN 100 and the SNs, and also to prevent overlapping of reference configuration IDs used by the SNs. However, this is an example, and the same ID may be set in a plurality of SNs. For example, a reference configuration ID may be designated by using a combination of identification information indicating an SN and an ID thereof. That is to say, a reference configuration with reference configuration ID = 1 for the SN 101 and a reference configuration with reference configuration ID = 1 for the SN 102 can be configurations that are different from each other. Note that in this case, the MN 100 notifies the terminal apparatus 151 of the following pieces of information (S310).
· Reference configurations of SN = 101
   ·· First reference configuration (reference configuration ID = 1)
   ·· Second reference configuration (reference configuration ID = 2)
· Reference configuration of SN = 102
   ·· Third reference configuration (reference configuration ID = 1)
· Delta configurations of SN = 101
   ·· Information of the cell 131 (first delta configuration, reference configuration ID = 1)
   ·· Information of the cell 132 (second delta configuration, reference configuration ID = 1)
   ·· Information of the cell 133 (third delta configuration, reference configuration ID = 2)
· Delta configurations of SN = 102
   ·· Information of the cell 141 (fourth delta configuration, reference configuration ID = 1)
   ·· Information of the cell 142 (fifth delta configuration, reference configuration ID = 1)
   ·· Information of the cell 143 (sixth delta configuration, reference configuration ID = 1)

For example, in obtaining setting information of the cell 132, the terminal apparatus 151 extracts the first reference configuration based on SN = 101 and reference configuration ID = 1. Then, the terminal apparatus 151 can obtain the setting information of the cell 132 using this first reference configuration and the second delta configuration. On the other hand, in obtaining setting information of the cell 143, the terminal apparatus 151 extracts the third reference configuration based on SN = 102 and reference configuration ID = 1. Then, the terminal apparatus 151 can obtain the setting information of the cell 143 using this third reference configuration and the sixth delta configuration. Note that although the above example has been described in relation to an example in which one reference configuration is specified by way of combinations of identification information and a reference configuration ID of each SN, no limitation is intended by this. For example, in a more generalized manner, a cell group may be defined, and one reference configuration may be specified based on identification information and a reference configuration ID of this cell group. Here, the cell group can be a plurality of subordinate cells of a plurality of SNs. Here, subordinate cells of one SN may belong to one group, or one or more subordinate cells of one SN may belong to a first group while other subordinate cells of this SN belong to a second group. In this configuration, too, while two or more reference configurations that have been set in each of two or more groups can be specified by using reference configuration IDs alone, one reference configuration can be uniquely specified by using a reference configuration ID in combination with identification information of a group.

Note that the maximum number of SNs that provide candidate cells may be designated in the MN 100. In this case, in a case where pieces of setting information related to cells provided by SNs exceeding the maximum number should be set, the MN 100 can instruct SNs so that, regarding such SNs exceeding the maximum number, a reference configuration and a delta configuration are not used, and normal setting information (full configuration) is used as is. In this case, an SN can instruct subordinate DUs to provide a full configuration, rather than a delta configuration.

Note that in a case where a plurality of SNs (or cell groups) are permitted to use overlapping reference configuration IDs, for example, each SN may be notified of a numerical value indicating the maximum number of reference configurations that can be set in this SN. Note that a plurality of SNs may be notified of a numerical value indicating the maximum number of reference configurations that can be set in each SN, in addition to reference configuration IDs that are notified in the above-described manner so that the plurality of SNs use separate reference configuration IDs. As an example, the MN 100 can hold the maximum number of reference configurations that can be set in the terminal apparatus 151, and determine the number of reference configurations that can be further set in the terminal apparatus 151 from the number of reference configurations that are currently set (have already been notified) and this maximum number. Then, based on this number, the MN 100 can decide the aforementioned maximum number of which each SN is to be notified. Also, the MN 100 may provide the SNs with a notification merely indicating that a reference configuration and a delta configuration should be generated, without notifying them of the numerical value indicating the maximum number and reference configuration IDs. For example, in a case where the maximum number of reference configurations has been determined in advance in the SNs and the like, it is sufficient to provide a notification merely indicating that a reference configuration and a delta configuration should be generated.

Each SN sets reference configurations within the range of the maximum number of reference configurations that can be set therein. Then, the SN can notify each of subordinate DUs of such reference configurations, and instruct the same to generate a delta configuration (S302, S303, S305). The DUs generate delta configurations based on the notified reference configurations, and notify the SN of the generated delta configurations (S306, S307). The SN aggregates the delta configurations generated by the respective DUs, and notifies the MN 100 of all of the set reference configurations and delta configurations (S308, S309). Note that the MN 100 is notified of the delta configurations together with information indicating with which reference configuration they are associated. For example, the SN 101 provides the MN 100 with a notification indicating that the delta configurations of the DU 111 and the DU 112 are associated with the reference configuration with reference configuration ID = 1, and the delta configuration of the DU 113 is associated with the reference configuration with reference configuration ID = 2. Note that although the above example has been presented using an example in which an SN generates reference configurations and notifies DUs of the generated reference configurations and the DUs generate delta configurations, no limitation is intended by this. For example, the SN may request the DUs to provide pieces of setting information of which the terminal apparatus 151 should be notified, aggregate these pieces of setting information, and generate reference configurations based on these pieces of setting information. For example, the SN can generate a reference configuration common to a plurality of pieces of setting information so that, due to the reference configuration, a sum total of the data amounts of delta configurations and the reference configuration becomes the smallest.

Note that it is not required for an SN to use up all of the reference configuration IDs of which it has been notified. Although the SN 102 can use reference configuration IDs = 3 and 4 in the example of FIG. 3, it is possible to use only one reference configuration (reference configuration ID = 3), and generate the delta configurations of the DUs 121 to 123 based on this reference configuration. Then, the SN 102 notifies the MN 100 of all of these delta configurations and reference configurations, and association between all of the delta configurations and the reference configuration with reference configuration ID = 3. Thereafter, the MN 100 notifies the terminal apparatus 151 of the obtained reference configurations and delta configurations, and information indicating with which reference configuration each delta configuration is associated.

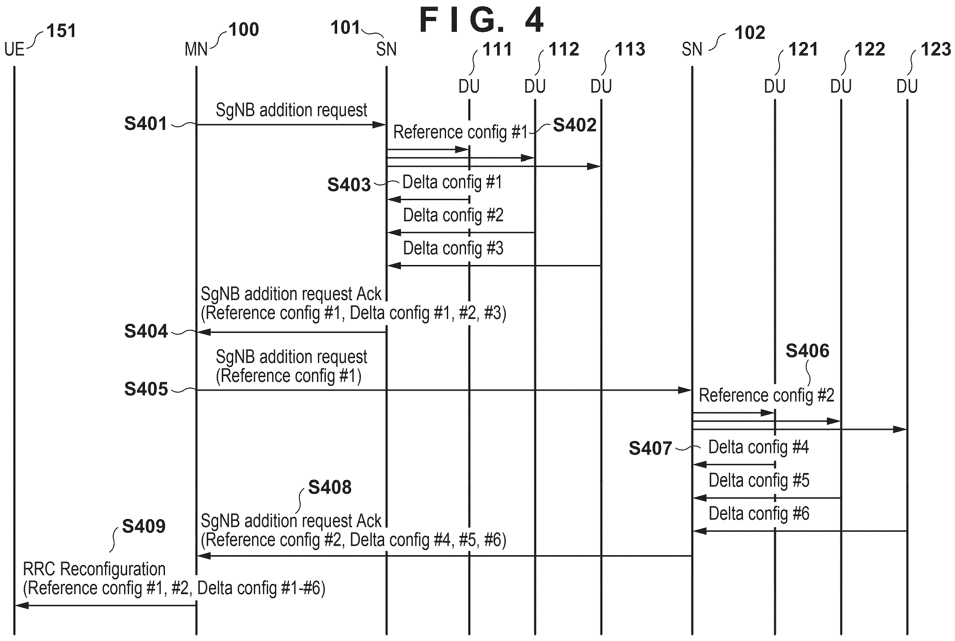

As a third example, the MN 100 can instruct SNs to generate reference configurations and delta configurations in a case where it does not have reference configurations, and can notify SNs of reference configurations and instruct them to generate delta configurations in a case where it has the reference configurations. For example, as shown in FIG. 4, while the MN 100 does not have reference configurations, it instructs the SN 101 to generate a reference configuration and delta configurations (S401). Then, the SN 101 can, for example, generate a reference configuration inside the self-apparatus, and instruct the DUs 111 to 113 to generate delta configurations (S402). Note that although the example of FIG. 4 is presented using an example in which the SN 101 generates a reference configuration and notifies the DUs 111 to 113 of the generated reference configuration, and the DUs 111 to 113 generate delta configurations, no limitation is intended by this. For example, the SN 101 may request the DUs 111 to 113 to provide pieces of setting information of which the terminal apparatus 151 should be notified, aggregate these pieces of setting information, and generate a reference configuration. In either case, the SN 101 notifies the MN 100 of the obtained reference configuration and the delta configurations for cells to be formed by the respective DUs (S403, S404).

It is assumed that the MN 100 thereafter instructs the SN 102 to generate delta configurations (S405). In this case, as the MN 100 has the reference configuration notified by the SN 101, it can notify the SN 102 of this reference configuration and instruct the SN 102 to generate delta configurations. The SN 102 may agree to or refuse to use this reference configuration. In the example of FIG. 4, it is assumed that the SN 102 has refused to use this reference configuration, and decided to use another reference configuration. In this case, the SN 102 notifies the DUs 121 to 123 of this other reference configuration (S406), and the DUs 121 to 123 generate delta configurations based on this other reference configuration. Then, the SN 102 can collect the delta configurations from the DUs 121 to 123 (S407), and notify the MN 100 of these delta configurations (S408). Note that the SN 102 can, for example, collect pieces of setting information from the DUs 121 to 123, respectively, and generate differences between these pieces of setting information and the reference configuration notified by the MN 100 as candidates for delta configurations. Then, the SN 102 can generate another reference configuration in a case where the data amount of these delta configurations exceeds a predetermined value. Note that this is an example, and a standard for generation of another reference configuration by the SN 102 can be determined in any manner. The MN 100 notifies the terminal apparatus 151 of the held reference configurations and the collected delta configurations (S409).

In the above-described manner, the MN 100 holds the first reference configuration used by the SN 101 and the second reference configuration used by the SN 102 after the processing of FIG. 4 has ended. Thereafter, in a case where an advance setting is to be configured while regarding still another cell as a secondary cell candidate, the MN 100 can notify an SN of the first reference configuration and the second reference configuration, and instruct the SN to generate delta configurations. In this way, the MN 100 can notify SNs of all of the held reference configurations and instruct the SNs to generate delta configurations. However, this is an example, and the MN 100 may, for example, notify the SNs of only a part of the held reference configurations, and instruct the SNs to generate delta configurations.

In the above-described manner, the terminal apparatus 151 can obtain reference configurations and delta configurations with respect to a plurality of cells that are considered as candidates for a cell to be added or a post-change cell as a secondary cell. The MN 100 may transmit an instruction to the terminal apparatus 151 so as to enable only a part of these plurality of cells. For example, along with a movement of the terminal apparatus 151, the MN 100 can enable advance settings with respect to cells within a predetermined distance from the position of this terminal apparatus 151, and disable advance settings with respect to other cells. For example, with regard to cells for which advance settings have been enabled, the terminal apparatus 151 can reproduce and hold pieces of setting information using reference configurations and delta configurations. Note that the terminal apparatus 151 can execute measurement of the wireless quality with respect to cells that have been enabled, and refrain from measuring the wireless quality with respect to cells that have not been enabled. The MN 100 can designate cells to be enabled/disabled using, for example, identification information (condReconfigId) specific to information elements related to each cell. Note that in a case where a plurality of cells that use a common reference configuration are enabled/disabled all at once, a reference configuration ID of this reference configuration may be designated. For example, the terminal apparatus 151 can be notified of such information as the following.
· Reference configuration ID = 1: Disabled
· Reference configuration ID = 2: Partially enabled
   ·· condReconfigId = A: Enabled
   ·· condReconfigId = B: Disabled
· Reference configuration ID = 3: Entirely enabled

Note that in the above-described example, it is assumed that in a case where a part of reference configurations is enabled, information indicating an enabled or disabled state is designated with respect to each of delta configurations that use such reference configurations, whereas in a case where all of reference configurations are enabled, all of delta configurations that use such reference configurations are enabled. However, no limitation is intended by this, and reference configurations may be "enabled" in both of a case where only a part of delta configurations that use reference configurations is enabled and a case where all of them are enabled; in this case, an enabled/disabled state may always be indicated individually with respect to each of the delta configurations that use these reference configurations.

When the terminal apparatus 151 has measured the wireless quality of measurement target (enabled) cells and determined that a condition for adding/changing a secondary cell has been satisfied in relation to a specific cell, it notifies the MN 100 of a RRC Reconfiguration Complete message and accesses this specific cell. That is to say, the terminal apparatus 151 can execute a random-access procedure to access this specific cell.

Note that although the terminal apparatus 151 maintains setting information related to a candidate cell after an addition or a change of a secondary cell, it is expected that this setting information should be deleted in a case where, for example, the terminal apparatus 151 has moved far away from this candidate cell. Also, for example, it is expected that at least one of reference configurations and delta configurations may need to be changed when, for example, a certain time period has elapsed after the terminal apparatus 151 is notified of reference configurations and delta configurations. Such deletion and change of settings are performed under, for example, an instruction from the MN 100.

The MN 100 or SNs that are currently connected to the terminal apparatus 151 can, for example, decide to delete reference configurations set in the terminal apparatus 151 in response to a change and an addition of a secondary cell candidate, or in response to setting of a new communication parameter that is based on reference configurations and delta configurations. Hereinafter, the MN 100 or SNs that are currently connected to the terminal apparatus 151 may be referred to as a "network". Note that a network node other than the MN 100 and SNs may decide to delete reference configurations set in the terminal apparatus 151, and transmit an instruction for such deletion to the terminal apparatus 151 via the MN 100 and SNs.

For example, a network can decide to delete any reference configuration when the number of set reference configurations has reached the maximum number (exceeded the maximum number). The network can transmit an instruction to the terminal apparatus 151 so as to, for example, delete the oldest reference configuration. Also, the network can decide a reference configuration to be deleted based on the result of measurement of wireless qualities in the terminal apparatus 151. For example, the network may specify the maximum values of wireless qualities of cells that use each of a plurality of reference configurations, and decide to delete a reference configuration with the smallest maximum value (or which is not used in a cell that can be determined to have a favorable wireless quality). Also, the network may, for example, delete delta configurations related to cells that are distanced from the position of the terminal apparatus 151 by a predetermined distance or more along with a movement of the terminal apparatus 151 and the like, and decide to delete a specific reference configuration in a case where all of delta configurations that refer to this specific reference configuration have been deleted. Furthermore, the network may instruct the terminal apparatus 151 that sets reference configurations to delete a reference configuration, and cause the terminal apparatus 151 to select which reference configuration is to be deleted. In this case, the terminal apparatus 151 can select and delete a reference configuration, and notify the network of a reference configuration ID of this deleted reference configuration.

The network excludes, from secondary cell candidates for the terminal apparatus 151, a cell that has generated a delta configuration using a reference configuration to be deleted. For example, the MN 100 can transmit a SgNB release request to an SN including a subordinate cell that uses the reference configuration to be deleted, and instruct the SN to delete setting information related to this cell. Note that in a case where a specific reference configuration is to be deleted and delta configurations that refer to this specific reference configuration are maintained, all of these delta configurations will be deleted. Also, cells corresponding to these delta configurations are excluded from secondary cell candidates. Note that in a case where a specific reference configuration is to be deleted and delta configurations that refer to this specific reference configuration are maintained, these delta configurations may be reconfigured based on another reference configuration. Note that in this case, the MN 100 can designate the other reference configuration, and instruct an SN including subordinate cells that use these delta configurations to update the delta configurations. Note that in this case, the SN may be forced to use the other reference configuration. That is to say, it is possible to forbid the SN from refusing to use this other reference configuration. For example, assume that it has been decided to delete a reference configuration with reference configuration ID = 2 in a state where reference configurations with reference configuration ID = 1 and 2 are used in one SN. In this case, the MN 100 can instruct this SN to reconfigure delta configurations that are based on the reference configuration with reference configuration ID = 2 with use of the reference configuration with reference configuration ID = 1. Note that reference configurations used in any cell can be left undeleted.

Also, configuration may be such that even in a case where the terminal apparatus 151 has stopped the use of a secondary cell or in a case where it has performed a handover of a primary cell, reference configurations and delta configurations are not deleted unless the MN 100 has issued an explicit instruction. However, no limitation is intended by this. For example, a reference configuration generated by an MN 100 that is a handover source can be deleted. On the other hand, reference configurations generated by SNs may be left undeleted. Note that in this case, the MN 100 that is the handover source can notify an MN 100 that is a handover destination of, for example, reference configuration IDs and the contents of corresponding reference configurations, SNs that have generated these reference configurations, and information of candidate cells of a secondary cell. Also, the MN 100 that is the handover source can notify the MN 100 that is the handover destination of information of delta configurations that refer to these reference configurations (IDs of the delta configurations, the contents of the delta configurations, and a condition for adding/changing cells corresponding to these delta configurations). As a result, the MN 100 that is the handover destination is no longer required to re-execute setting processing for adding/changing secondary cells. Also, for example, in a case where the use of a secondary cell has been stopped, a case where a handover of a primary cell has been performed, or a case where the use of a primary cell is to be terminated or halted (in a case where an RRC state makes a transition from a connected mode to an idle mode or an inactive mode), the terminal apparatus 151 can independently delete reference configurations and delta configurations, or either of them, without waiting for an explicit instruction from the MN 100. In this case, since it is no longer necessary for the network side to execute processing for reducing a dynamic memory for holding reference configurations, and sharing reference configurations and delta configurations with another base station apparatus, implementation on the network side can be simplified.

In a case where a reference configuration is to be changed, a "delta-reference configuration" indicating only setting items that should be changed out of the reference configuration may be used. Regarding setting items set in the delta-reference configuration, the reference configuration can be changed using the values of these setting items; regarding other setting items, the reference configuration can be maintained. At this time, there is a case where a delta configuration is also changed as a result of changing the reference configuration. Therefore, a "delta-delta configuration" indicating only setting items that should be changed out of the delta configuration may be used. Regarding setting items set in the delta-delta configuration, the delta configuration can be changed using the values of these setting items; regarding other setting items, the delta configuration can be maintained. In this way, when changing a reference configuration (and a delta configuration), only differential values thereof are exchanged among the MN 100, SNs, and the terminal apparatus, and thus setting information can be updated using a small data amount. Note that in a case where a reference configuration and a delta configuration are significantly changed, the reference configuration and the delta configuration that were used up until that time may be replaced with a reference configuration and a delta configuration that have been newly generated, without using a delta-reference configuration and a delta-delta configuration. That is to say, the reference configuration and the delta configuration that were used up until that time can be deleted, and the reference configuration and the delta configuration that have been newly generated can be stored in the terminal apparatus 151.

When changing a reference configuration, a network notifies the terminal apparatus 151 of one of (1) a delta-reference configuration and (2) a reference configuration that has been newly generated. In a case where the terminal apparatus 151 has received the delta-reference configuration, it replaces setting items designated by the delta-reference configuration among setting items in the reference configuration that is currently used with setting values in this delta-reference configuration. Also, in a case where the terminal apparatus 151 has received the reference configuration that has been newly generated, it replaces the entirety of the held reference configuration with the reference configuration that has been newly generated. Furthermore, in a case where a change has been made to setting items that are not designated by delta configurations related to respective cells that use this reference configuration, the terminal apparatus 151 updates setting information by changing these setting items related to these cells. This configuration could possibly lead to an occurrence of a case where, even if a reference configuration has been changed, setting information related to each cell is not updated based on delta configurations. However, the terminal apparatus 151 maintains the updated reference configuration for use in later generation of setting information that uses a delta configuration of another cell. Note that when updating a reference configuration, the reference configuration to be updated can be designated using a reference configuration ID. Note that the updated reference configuration may take over a reference configuration ID of the pre-update reference configuration, or a new reference configuration ID may be assigned to the updated reference configuration.

On the other hand, when changing a delta configuration, a network notifies the terminal apparatus 151 of one of (1) a delta-delta configuration and (2) a delta configuration that has been newly generated. In a case where the terminal apparatus 151 has received a delta-delta configuration related to a specific cell, it replaces setting items designated by the delta-delta configuration among setting items in a delta configuration that is currently used in relation to this cell with setting values in this delta-delta configuration. Also, in a case where the terminal apparatus 151 has received a delta configuration that has been newly generated in relation to a specific cell, it replaces the entirety of the held delta configuration of this cell with the delta configuration that has been newly generated. Note that when updating a delta configuration, the delta configuration to be updated can be designated by a cell identifier or condReconfigId. In accordance with a change in a delta configuration, the terminal apparatus 151 updates setting information of a cell that uses this delta configuration. The terminal apparatus 151 changes setting items in the updated delta configuration out of setting information of the cell corresponding to the updated delta configuration in accordance with the update of this delta configuration, thereby updating the setting information.

Note that when a network notifies the terminal apparatus 151 of a delta-reference configuration for an existing first reference configuration and transmits thereto an instruction indicating that a second reference configuration should be generated, the network may provide an instruction indicating that the first reference configuration should be maintained as is. For example, regarding a part of a plurality of cells that use the first reference configuration, the second reference configuration can be used as a reference configuration, whereas regarding other cells, a new second reference configuration that is based on the existing first reference configuration can be generated and the first reference configuration can be maintained in a case where the first reference configuration is used as a reference configuration. Note that in this case, a reference configuration ID can be newly appended to the second reference configuration, and the terminal apparatus 151 can be notified of this reference configuration ID. Note that in a case where the MN 100 has decided to change a reference configuration, the MN 100 can instruct an SN that is using this reference configuration to change the reference configuration in a manner similar to the above-described notification to the terminal apparatus 151. Also, in a case where an SN has decided to change a reference configuration, the SN can request the MN 100 to change the reference configuration by designating this reference configuration, and change the reference configuration in a case where this request has been approved. In this case, in a case where the MN 100 has approved the change of the reference configuration, it notifies the SN of information indicating the approval, and also notifies the terminal apparatus 151 of the approved reference configuration.

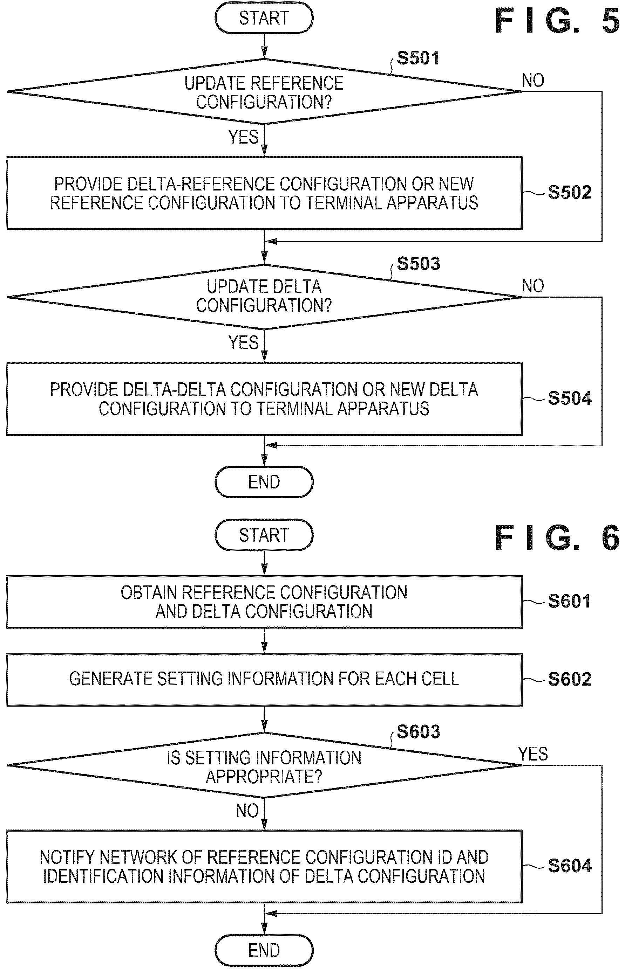

Note that although the above description has been provided in relation to processing for a case where one of a reference configuration and a delta configuration is updated, both of a reference configuration and a delta configuration can be updated as shown in FIG. 5, for example. That is to say, which one of a reference configuration and a delta configuration should be updated is determined (S501, S503). Then, in a case where the reference configuration should be updated (YES of S501), a delta-reference configuration or a reference configuration that has been newly prepared is provided to the terminal apparatus (and an SN as necessary) (S502). Similarly, in a case where the delta configuration should be updated (YES of S503), a delta-delta configuration or a delta configuration that has been newly prepared is provided to the terminal apparatus (and an SN as necessary) (S504).

Note that although the terminal apparatus 151 can generate setting information related to each cell based on the obtained reference configuration and delta configuration, it is necessary to check whether this setting information is appropriate. For example, the terminal apparatus 151 can determine that this setting information is not appropriate in a case where this setting information includes a parameter that exceeds the capability of the self-apparatus (i.e., cannot be executed by the terminal apparatus 151). Furthermore, the terminal apparatus 151 can determine that this setting information is not appropriate also in a case where the setting information does not include necessary parameters, in a case where the terminal apparatus 151 cannot construe the content of this setting information, and the like. For example, in a case where a reference configuration has been deleted by mistake, necessary parameters could possibly be absent when only a delta configuration is used, and it is thus determined that the setting information is not appropriate.

For example, as shown in FIG. 6, at the time point of obtainment of a reference configuration and a delta configuration with respect to a secondary cell candidate (S601), the terminal apparatus 151 can generate setting information of this cell using these pieces of information (S602), and determine whether this setting information is appropriate (S603). That is to say, with regard to a cell under an environment where setting information can be prepared (both of a reference configuration and a delta configuration are ready), the terminal apparatus 151 determines whether this setting information can be used. Then, in a case where the setting information that has been generated using a combination of the reference configuration and the delta configuration is appropriate, the terminal apparatus 151 maintains this setting information. On the other hand, in a case where this setting information is not appropriate, the terminal apparatus 151 notifies a network (the MN 100 or an SN that is currently connected) of a reference configuration ID and identification information of a delta configuration (condReconfigId) (S604). This notification is provided using, for example, an RRC Reconfiguration Complete message. Here, the network is notified of information indicating that an error has occurred. This notification can be provided by, for example, setting failuretype in the message at srb3-IntegrityFailure or scg-reconfigFailure. Upon receiving this notification, the network notifies the terminal apparatus 151 of the reference configuration, the delta configuration, and the reference configuration ID based on the reference configuration ID and the identification information of the delta configuration. Note that the terminal apparatus 151 may determine which one of the reference configuration and the delta configuration is not appropriate, and notify the network so that the configuration that has caused the inappropriateness is transmitted. Note that in a case where a parameter that cannot be used by the terminal apparatus 151 has been set, the network can instruct an SN to re-set the reference configuration and the delta configuration. In this way, the terminal apparatus 151 can determine the appropriateness of setting information before actually adding/changing a secondary cell, and appropriate setting information can be prepared in advance.

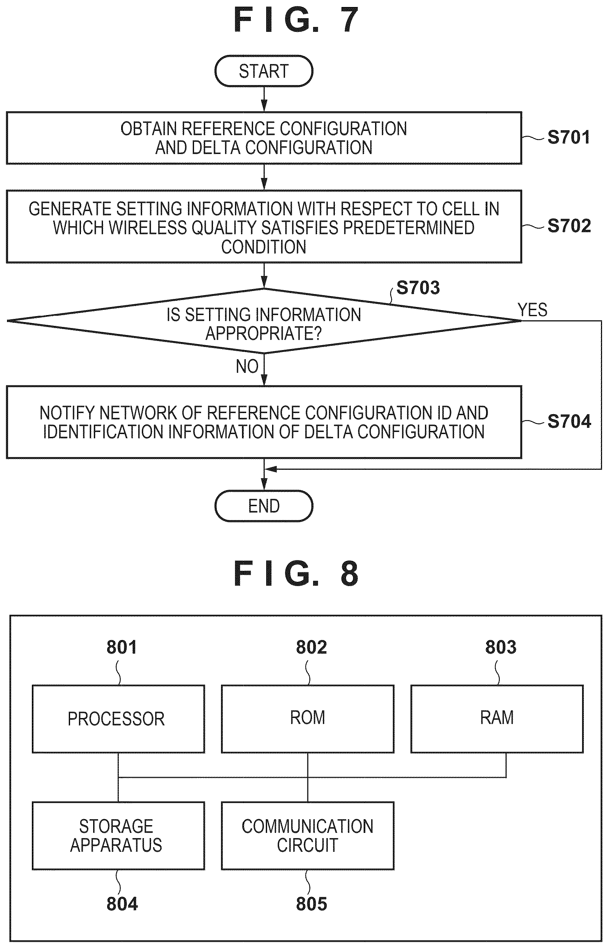

Also, as shown in FIG. 7, the terminal apparatus 151 may not generate setting information at the time point of obtainment of a reference configuration and a delta configuration, and generate setting information with respect to, for example, a cell in which the result of measurement of the wireless quality satisfies a predetermined condition (S701, S702). In this case, the terminal apparatus 151 checks the appropriateness with regard to the generated setting information (S703). In a case where the generated setting information has been determined to be inappropriate, the terminal apparatus 151 can subsequently generate setting information with respect to another cell in which the result of measurement of the wireless quality satisfies the predetermined condition. Note that even if there are no secondary cells in which the result of measurement of the wireless quality satisfies the predetermined condition, in a case where there is another cell that is more favorable in wireless quality than a current secondary cell and setting information in this cell is appropriate, the terminal apparatus 151 can switch the connection to this cell. In a case where there is inappropriate setting information, the terminal apparatus 151 can provide a network with a notification related to inappropriate setting information in the above-described manner (S704). In an example, after connecting to a cell with appropriate setting information, the terminal apparatus 151 can notify the network of a reference configuration ID and identification information of a delta configuration (condReconfigId) corresponding to this inappropriate setting information with use of UE assistance information. Upon receiving this notification, the network modifies the reference configuration and delta configuration based on the reference configuration ID and the identification information of the delta configuration, and notifies the terminal apparatus 151 of the reference configuration, the delta configuration, and the reference configuration ID again. In this way, setting information is not generated at the time point of obtainment of a reference configuration and a delta configuration, and setting information is generated when the predetermined condition, such as a condition on the wireless quality, has been satisfied and the appropriateness thereof is evaluated; as a result, the capacity of a memory that holds setting information in the terminal apparatus 151 can be reduced.

Note that in a case where setting information of a serving cell is used as a reference configuration, there is a possibility that the setting information of the serving cell is changed from the time point of obtainment of a reference configuration and a delta configuration to the time point when the result of measurement of the wireless quality of any candidate cell satisfies the predetermined condition. In this case, as the reference configuration is also changed, the generated setting information can be different between a case where the setting information of this cell is generated using pieces of information of the reference configuration and the delta configuration at the time point of obtainment of the reference configuration and the delta configuration, and a case where the setting information of this cell is generated at the time point when the result of measurement of the wireless quality of a candidate cell satisfies the predetermined condition. Therefore, it is necessary for the network and the terminal apparatus 151 to agree upon which time point the setting information of the cell is to be generated. Therefore, the network may notify the terminal apparatus 151 of information designating at which timing the setting information of the cell is to be generated. Also, the network and the terminal apparatus 151 may be pre-set so that the setting information of the cell is generated at a fixed timing that has been arbitrarily set in advance, without providing a notification of such information.

In a case where setting information of a serving cell is used as a reference configuration, the terminal apparatus 151 can save the setting information of the serving cell held in the terminal apparatus 151 as the reference configuration at the time point of obtainment of the reference configuration and a delta configuration. Also, in order to reduce the capacity of a memory that holds setting information in the terminal apparatus 151, it is also possible to save setting information of the serving cell as a reference configuration at the time point when the predetermined condition, such as a condition on the wireless quality, has been satisfied, without saving a reference configuration at the time point of obtainment of the reference configuration and a delta configuration. Note that in a case where the terminal apparatus 151 saves setting information of the serving cell as a reference configuration at the time point of obtainment of a reference configuration and a delta configuration, it is expected that the contents of the setting information of the serving cell and the reference configuration do not match if an instruction for changing the settings of the serving cell is received from a network after saving the reference configuration. Therefore, to prevent this inconsistency, in a case where an instruction for changing the settings of the serving cell has been received from a network after saving a reference configuration, the network can transmit an instruction to the terminal apparatus 151 so as to make changes of the same content to both of the serving cell and the reference configuration. In this case, the network may issue an instruction for only changing the settings of the serving cell, rather than issuing overlapping instructions on the content of change, and the terminal apparatus 151 may independently make a change of the same content as the settings of the serving cell to the reference configuration even without an explicit instruction.

Also, regarding each setting item in setting information related to a cell, two types of information categories, namely mandatory (indispensable) and optional (dispensable), are defined; in a case where the terminal apparatus 151 is not notified of a setting item that is considered mandatory (indispensable), setting information is determined to be inappropriate. Therefore, with a message format (a style of a message) that provides a notification of setting information related to a conventional cell that does not use a reference configuration, a mandatory (indispensable) setting item needs to be included. However, in a case where setting information is generated using a reference configuration and a delta configuration, a notification of a setting item that is considered mandatory (indispensable) among setting items related to a candidate cell may be provided by being included in the delta configuration, rather than being included in the reference configuration. In this case, a mandatory (indispensable) setting item can be omitted in the reference configuration.

FIG. 8 is a diagram showing an exemplary hardware configuration of the aforementioned MN 100, SNs, and terminal apparatus 151. In an example, the MN 100, SNs, and terminal apparatus 151 are configured to include a processor 801, a ROM 802, a RAM 803, a storage apparatus 804, and a communication circuit 805. The processor 801 is a computer that is configured to include one or more processing circuits, such as a general-purpose CPU (central processing unit) and an ASIC (application-specific integrated circuit), and executes overall processing of the MN 100, SNs, and terminal apparatus 151 and each process to be described later by reading out a program stored in the ROM 802 and the storage apparatus 804 and executing the program. The ROM 802 is a read-only memory that stores information, such as programs and various types of parameters, related to processing executed by the MN 100, SNs, and terminal apparatus 151. The RAM 803 is a random-access memory that functions as a working space at the time of execution of a program by the processor 801, and stores temporary information. The storage apparatus 804 is composed of, for example, an attachable and removable external storage apparatus or the like. The communication circuit 805 is a communication circuit that is intended for mutual communication among the MN 100, SNs, and terminal apparatus 151, and includes a wired interface or a wireless interface.

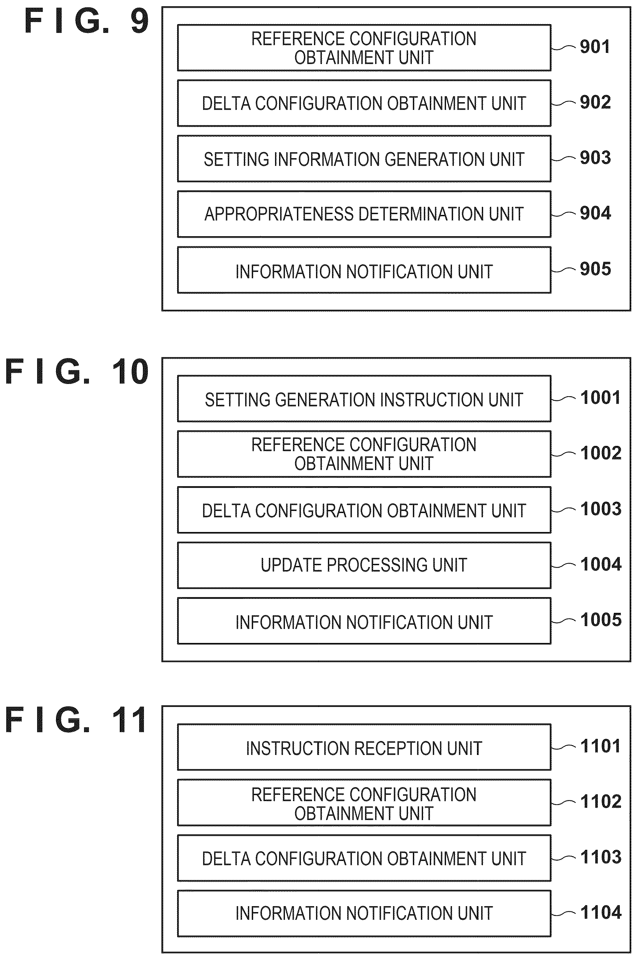

FIG. 9 is a diagram for a general description of an exemplary functional configuration of the terminal apparatus 151. Note that each functional unit shown in FIG. 9 may be embodied by, for example, the processor 801 executing a program stored in the ROM 802 and the like, or dedicated hardware that realizes each function may be prepared. Also, FIG. 9 particularly shows functions related to processing according to the present embodiment, and the terminal apparatus 151 can naturally include functions as a normal terminal apparatus that performs communication conforming to, for example, a cellular communication standard of the 3GPP^{®}. Furthermore, two or more functional blocks shown in FIG. 9 may be integrated and realized as one functional block, and one functional block may be divided into a plurality of functional blocks. The terminal apparatus 151 includes, as functions thereof, a reference configuration obtainment unit 901, a delta configuration obtainment unit 902, a setting information generation unit 903, an appropriateness determination unit 904, and an information notification unit 905, for example. Note that although these are described here as functions related to a secondary cell, the terminal apparatus 151 can include similar functions also in relation to a candidate cell of a handover destination of a primary cell.

The reference configuration obtainment unit 901 obtains, for example, a reference configuration that can be used for setting information of candidate cells for an addition/change of a secondary cell from the MN 100. The reference configuration obtainment unit 901 obtains information in which the reference configuration and a reference configuration ID thereof are associated with each other. The delta configuration obtainment unit 902 obtains delta configurations to be used in generation of the setting information related to the respective candidate cells mentioned above. A delta configuration is information specific to a cell, and is obtained in a format in which it is associated with a reference configuration ID to indicate with which reference configuration it should be used with. Note that although the reference configuration and delta configurations can be obtained all at once (within one message) from the MN 100, no limitation is necessarily intended by this. That is to say, a reference configuration may be obtained in a first message, and a delta configuration may be obtained in a second message that is different from the first message. Also, the terminal apparatus 151 may be notified of only one of a reference configuration and a delta configuration in a case where setting information is to be updated. The setting information generation unit 903 combines an obtained delta configuration and a reference configuration with a reference configuration ID associated with this delta configuration, and generates setting information of a candidate cell related to this delta configuration. Note that the setting information generation unit 903 may generate setting information at the time point of obtainment of a reference configuration and a delta configuration, or may generate setting information with respect to, for example, a cell in which the wireless quality measured by the terminal apparatus 151 satisfies the predetermined condition and refrain from generating setting information unless the predetermined condition is satisfied. The appropriateness determination unit 904 evaluates, for example, whether setting information generated by the setting information generation unit 903 can be used by the terminal apparatus 151, whether an indispensable parameter is missing, and whether the terminal apparatus 151 can interpret the setting information, thereby determining whether the setting information is appropriate. In a case where the setting information is not appropriate, the information notification unit 905 provides a predetermined notification to the MN 100 and SN that is currently connected. Thereafter, in a case where at least one of a reference configuration and a delta configuration has been updated, the reference configuration obtainment unit 901 or the delta configuration obtainment unit 902 can obtain information, and setting information can be updated.

FIG. 10 is a diagram for a general description of an exemplary functional configuration of the MN 100. Note that each functional unit shown in FIG. 10 may be embodied by, for example, the processor 801 executing a program stored in the ROM 802 and the like, or dedicated hardware that realizes each function may be prepared. Also, FIG. 10 particularly shows functions related to processing according to the present embodiment, and the MN 100 can naturally include functions as a normal base station apparatus that performs communication conforming to, for example, a cellular communication standard of the 3GPP^{®}. Furthermore, two or more functional blocks shown in FIG. 10 may be integrated and realized as one functional block, and one functional block may be divided into a plurality of functional blocks. The MN 100 includes, as functions thereof, a setting generation instruction unit 1001, a reference configuration obtainment unit 1002, a delta configuration obtainment unit 1003, an update processing unit 1004, and an information notification unit 1005, for example. Note that although the present description is provided in relation to a secondary cell, the MN 100 can include similar functions also in relation to a candidate cell of a handover destination of a primary cell.

The setting generation instruction unit 1001 instructs an SN that includes a candidate cell of a secondary cell as its subordinate to generate setting information for connecting to this cell. Here, the setting generation instruction unit 1001 instructs the SN to generate setting information in a format that uses a combination of a reference configuration and a delta configuration, for example. For example, when the number of reference configurations has reached the maximum number, the setting generation instruction unit 1001 can instruct the SN to generate a full configuration so that a reference configuration is not newly set thereafter. A reference configuration obtainment unit 1002 can generate, for example, a reference configuration in the self-apparatus. Also, the reference configuration obtainment unit 1002 can receive, for example, a reference configuration generated by the SN from this SN. The delta configuration obtainment unit 1003 obtains, from the SN, delta configurations that are respectively specific to subordinate cells of this SN. A delta configuration is associated with a reference configuration ID indicating with which reference configuration the delta configuration should be combined. For example, when it has become necessary to update at least one of a reference configuration and a delta configuration, an update processing unit 1004 transmits an instruction to the SN to newly generate a reference configuration and a delta configuration. After the update processing unit 1004 has transmitted this instruction, the reference configuration obtainment unit 1002 and the delta configuration obtainment unit 1003 obtain at least one of the updated reference configuration and delta configuration. The information notification unit 1005 provides the obtained reference configuration and delta configuration to the terminal apparatus 151. The information notification unit 1005 can notify the terminal apparatus 151 of information including a reference configuration ID indicating with which reference configuration the delta configuration should be combined.

FIG. 11 is a diagram for a general description of an exemplary functional configuration of the SN 101 and SN 102. Note that each functional unit shown in FIG. 11 may be embodied by, for example, the processor 801 executing a program stored in the ROM 802 and the like, or dedicated hardware that realizes each function may be prepared. Also, FIG. 11 particularly shows functions related to processing according to the present embodiment, and the SN 101 and SN 102 can naturally include functions as a normal base station apparatus that performs communication conforming to, for example, a cellular communication standard of the 3GPP^{®}. Furthermore, two or more functional blocks shown in FIG. 11 may be integrated and realized as one functional block, and one functional block may be divided into a plurality of functional blocks. The SN 101 and SN 102 include, as functions thereof, an instruction reception unit 1101, a reference configuration obtainment unit 1102, a delta configuration obtainment unit 1103, and an information notification unit 1104, for example. Note that although the present description is provided in relation to a secondary cell, a base station apparatus that is an MN candidate, in place of the SNs, can include similar functions in relation to a candidate cell of a handover destination of a primary cell.

The instruction reception unit 1101 receives an instruction from the MN. For example, the instruction reception unit 1101 can receive, from the MN, a message with an instruction indicating that a delta configuration should be generated. Also, the instruction reception unit 1101 can further receive, from the MN, an instruction indicating that a reference configuration should be generated. For example, in a case where the instruction reception unit 1101 has received an instruction including a reference configuration generated by the MN, it can specify that this instruction is an instruction for generating a delta configuration. Also, in a case where the instruction reception unit 1101 has received an instruction that does not include a reference configuration, it can specify that this instruction is an instruction for generating a reference configuration and a delta configuration. Furthermore, the instruction reception unit 1101 can receive an instruction for updating at least one of a reference configuration and a delta configuration from the MN. The reference configuration obtainment unit 1102 can obtain, for example, a reference configuration included in an instruction received by the instruction reception unit 1101. Also, for example, in a case where an instruction received by the instruction reception unit 1101 does not include a reference configuration, and in a case where the use of the reference configuration included in the instruction is to be refused, the reference configuration obtainment unit 1102 generates and obtains a new reference configuration. The delta configuration obtainment unit 1103 obtains a difference between setting information for communication in a subordinate cell and the reference configuration obtained by the reference configuration obtainment unit 1102 as a delta configuration. Note that the delta configuration obtainment unit 1103 can, for example, cause a subordinate DU to generate a delta configuration, and obtain this generated delta configuration from the DU. The information notification unit 1104 notifies the MN of information of the obtained delta configuration. Note that in a case where a reference configuration has been generated in the SN, the information notification unit 1104 notifies the MN of this reference configuration. Note that the information notification unit 1104 notifies the MN of a reference configuration ID, which indicates with which reference configuration the delta configuration should be combined, in association with the delta configuration.

Note that at least a part of the above-described functions as the MN may be fulfilled by an SN to which the terminal apparatus 151 is currently connected.

As described above, according to the present embodiment, it is possible to appropriately set and manage setting information for performing communication in a cell to which the terminal apparatus should be newly connected, with use of a reference configuration and a delta configuration. Therefore, setting processing that uses a reference configuration and a delta configuration related to a conditional handover, or a conditional secondary cell addition or change, can be efficiently executed on the terminal apparatus. This makes it possible to contribute to Goal 9 of Sustainable Development Goals (SDGs) led by the United Nations, which is to "build resilient infrastructure, promote inclusive and sustainable industrialization, and foster innovation".

The invention is not limited to the foregoing embodiments, and various variations/changes are possible within the spirit of the invention.

The present application claims the benefit of priority from Japanese Patent Application No. 2023-079348 filed on May 12, 2023, which is hereby incorporated by reference herein in its entirety.

## Claims

1. A base station apparatus, comprising:
obtaining means for obtaining information for generating setting information related to a plurality of cells for a conditional handover (CHO) or a conditional secondary cell addition or change (CPAC) in a terminal apparatus that is currently connected to the base station apparatus, the information including a reference configuration, which is common to two or more cells among the plurality of cells and to which identification information uniquely specifying the reference configuration is allocated, delta configurations that are respectively specific to the two or more cells, and the identification information of the reference configuration to be combined with the delta configurations;
providing means for providing the terminal apparatus with the information and a condition under which the CHO or the CPAC is to be executed; and
instructing means for, in a case where at least one configuration among the reference configuration and the delta configurations is to be deleted or changed, designating the at least one configuration and issuing an instruction for the deletion or the change to the terminal apparatus.

2. The base station apparatus according to claim 1, wherein
to designate the reference configuration, the instructing means uses the identification information.

3. The base station apparatus according to claim 1, wherein
to designate a delta configuration, the instructing means uses a cell identifier of a cell for which the delta configuration is used, or information that specifies an information element obtained by combining the condition for the CHO or the CPAC, the delta configuration, and the identification information of the reference configuration indicating whether the reference configuration is to be combined with the delta configuration.

4. The base station apparatus according to claim 1, wherein
in a case where there is no delta configuration to be combined with the reference configuration, the instructing means issues an instruction for deleting the reference configuration.

5. The base station apparatus according to claim 1, wherein
in a case of issuing an instruction for changing the at least one configuration among the reference configuration and the delta configurations, the instructing means notifies the terminal apparatus of difference information indicating a setting item that is to be changed in the at least one configuration among the reference configuration and the delta configurations.

6. The base station apparatus according to claim 1, wherein
in a case of issuing an instruction for changing the at least one configuration among the reference configuration and the delta configurations, the instructing means notifies the terminal apparatus of the at least one configuration to be replaced among the reference configuration and the delta configurations.

7. A terminal apparatus, comprising:
obtaining means for obtaining, from a base station apparatus to which the terminal apparatus is currently connected, information for generating setting information related to a plurality of cells for a conditional handover (CHO) or a conditional secondary cell addition or change (CPAC), and a condition under which the CHO or the CPAC is to be executed, the information including a reference configuration common to two or more cells among the plurality of cells, and delta configurations that are respectively specific to the two or more cells;
generating means for, with respect to at least one cell among the two or more cells, generating setting information for communication in the at least one cell with use of the corresponding delta configuration and the reference configuration;
executing means for, upon receiving an instruction for deletion or change with a designation of at least one configuration among the reference configuration and the delta configurations, executing the deletion or change of the designated configuration among the reference configuration and the delta configurations; and
executing means for executing the CHO or the CPAC with use of the generated setting information in response to the condition being satisfied.

8. The terminal apparatus according to claim 7, wherein
identification information that uniquely specifies the reference configuration is allocated to the reference configuration, and the information further includes the identification information of the reference configuration to be combined with a delta configuration.

9. The terminal apparatus according to claim 7, wherein
the instruction for deletion or change includes the identification information as information that designates the reference configuration.

10. The terminal apparatus according to claim 7, wherein
the instruction for deletion or change includes, as information that designates a delta configuration, a cell identifier of a cell in which the delta configuration is used, or information that specifies an information element obtained by combining the condition for the CHO or the CPAC, the delta configuration, and the identification information of the reference configuration indicating whether the reference configuration is to be combined with the delta configuration.

11. The terminal apparatus according to claim 7, wherein
in a case deletion of the reference configuration is instructed, the reference configuration is deleted, and a delta configuration to be combined with the reference configuration is deleted.

12. The terminal apparatus according to claim 7, wherein
the instruction for change of the at least one configuration among the reference configuration and the delta configurations includes difference information indicating a setting item that is to be changed in the at least one configuration among the reference configuration and the delta configurations.

13. The terminal apparatus according to claim 7, wherein
the instruction for changing the at least one configuration among the reference configuration and the delta configurations includes the at least one configuration to be replaced among the reference configuration and the delta configurations.

14. The terminal apparatus according to claim 7, wherein
in a case where the terminal apparatus transitions from a currently-connected state to an idle state, the executing means independently deletes the reference configuration and the delta configurations.

15. The terminal apparatus according to claim 7, wherein
in a case where use of a secondary cell is stopped without an instruction from the base station apparatus to which the terminal apparatus is currently connected, the reference configuration and the delta configurations are deleted.

16. A control method executed by a base station apparatus, the control method comprising:
obtaining information for generating setting information related to a plurality of cells for a conditional handover (CHO) or a conditional secondary cell addition or change (CPAC) in a terminal apparatus that is currently connected to the base station apparatus, the information including a reference configuration, which is common to two or more cells among the plurality of cells and to which identification information uniquely specifying the reference configuration is allocated, delta configurations that are respectively specific to the two or more cells, and the identification information of the reference configuration to be combined with the delta configurations;
providing the terminal apparatus with the information and a condition under which the CHO or the CPAC is to be executed; and
in a case where at least one configuration among the reference configuration and the delta configurations is to be deleted or changed, designating the at least one configuration and issuing an instruction for the deletion or the change to the terminal apparatus.

17. A control method executed by a terminal apparatus, the control method comprising:
obtaining, from a base station apparatus to which the terminal apparatus is currently connected, information for generating setting information related to a plurality of cells for a conditional handover (CHO) or a conditional secondary cell addition or change (CPAC), and a condition under which the CHO or the CPAC is to be executed, the information including a reference configuration common to two or more cells among the plurality of cells, and delta configurations that are respectively specific to the two or more cells;
generating, with respect to at least one cell among the two or more cells, setting information for communication in the at least one cell with use of the corresponding delta configuration and the reference configuration;
executing, upon receiving an instruction for deletion or change with a designation of at least one configuration among the reference configuration and the delta configurations, the deletion or change of the designated configuration among the reference configuration and the delta configurations; and
executing the CHO or the CPAC with use of the generated setting information in response to the condition being satisfied.

18. A program for causing a computer to function as the base station apparatus according to any one of claims 1 to 6.

19. A program for causing a computer to function as the terminal apparatus according to any one of claims 1 to 6.
